# EUROPEAN PATENT APPLICATION

(11) **EP 4 803 560 A1**
(43) Date of publication of application: **09.09.2026**
(21) Application number: 24885335.0
(22) Date of filing: 30.09.2024
(51) Int. Cl.: C08G 18/44, C08G 18/00, C08G 18/08, C08G 18/79

(54) **AQUEOUS POLYURETHANE**

(30) Priority: 30.10.2023 JP 2023185695
(71) Applicant: ASAHI KASEI KABUSHIKI KAISHA, Tokyo 100-0006 (JP)
(72) Inventor: HIROSE, Yoichi, Tokyo 100-0006 (JP)
(74) Representative: Strehl & Partner mbB
(86) International application number: PCT/JP2024/035001
(87) International publication number: WO 2025/094559

(57) **Abstract**

The present disclosure provides, for example, a water-based polyurethane that is superior in storage stability and quick-drying ability and capable of forming a urethane film superior in chemical resistance even for short-time film formation, and a production method for the water-based polyurethane. The water-based polyurethane of the present disclosure is characterized by being a water dispersion of polyurethane, the water dispersion containing polyurethane and water, wherein the polyurethane contains: a main chain having a urethane bond and a structure represented by a formula (1); and a side chain branching from the main chain and having a hydrophilic group, wherein the formula (1) is as follows: 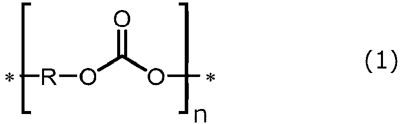 wherein R groups are the same or different, each being a linear or branched or alicyclic divalent hydrocarbon group having 2 to 20 carbon atoms and optionally substituted with a heteroatom, n represents an integer of 1 to 50, and * indicates bonding, the content proportion of the structure represented by the formula (1) with respect to the total mass of the polyurethane is 35% by mass or more, the polyurethane contains 0.00 to 0.85% by mass of a carboxyl group and a carboxylate group with respect to the total mass of the polyurethane, and the solid content of the polyurethane to the water dispersion is 35% by mass or more.

## Description

### Technical Field

The present invention relates to a water-based polyurethane and others.

### Background Art

Polyurethane resin is used in a wide variety of fields including synthetic leather, artificial leather, adhesives, coating materials for furniture, and coating materials for automobiles. Polyurethane resin is typically given as an addition polymer of a polyisocyanate component and a polyol component. Polyurethane resin is required to have various types of durability such as thermal resistance, water resistance, weatherability, hydrolysis resistance, solvent resistance, sunscreen resistance, and scratch resistance. Accordingly, use of a polyol component having a backbone structure of, for example, polyether, polyester, or polycarbonate has been studied as the polyol component to be reacted with the polyisocyanate component among starting materials of polyurethane resin.

In general, polyurethane resin is diluted with solvent in use, and a film is formed by applying the diluted product onto a target substrate and removing the solvent. However, recent tightening of emission regulations for organic solvents for the purpose of reducing environmental loads has been promoting development of polyurethanes without using any organic solvent. One of them is water-based polyurethane. Water-based polyurethane is a water dispersion with polyurethane resin dispersed in water and contains no organic solvent, thus being a material capable of forming a polyurethane coating film without emitting any organic solvent to the atmosphere.

Specifically, Patent Literature 1 discloses an aqueous polyurethane-based emulsion coating material (water-based urethane) given by reacting (a) isophorone diisocyanate, (b) an active-hydrogen-group-containing compound containing polyester polyol derived from ethylene glycol and neopentyl glycol as low-molecular-weight polyols, isophthalic acid as an aromatic polycarboxylic acid, and azelaic acid as an aliphatic polycarboxylic acid, wherein the mass ratio between the aromatic polycarboxylic acid and the aliphatic polycarboxylic acid is 35/65 to 65/35, and (c) 2,2-dimethylolpropionic acid and/or 2,2-dimethylolbutanoic acid.

### Citation List

### Patent Literature

Patent Literature 1: Japanese Patent No. 3896578

### Summary of Invention

### Technical Problem

Water-based polyurethane is an eco-friendly material that emits no organic solvent in film formation, and researches therefor have been actively conducted in recent years. While evaporating water is required in forming a urethane film with water-based polyurethane, the latent heat of evaporation of water is relatively large, and hence more thermal energy is needed in film formation. Contemplated as methods for reducing energy required for film formation are, for example, a method of increasing the solid content of water-based polyurethane and a method of shortening calcination time in film formation.

However, merely increasing the solid content of water-based polyurethane causes a problem of lowering of the dispersion stability of water-based polyurethane, which deteriorate the storage stability. Shortening treatment time for the evaporation of water enables reduction of energy consumption, whereas, in this case, film formation is insufficient, and the resulting urethane film suffers from a problem, for example, decrease in film strength or chemical resistance.

In view of such circumstances, an object of the present invention is to provide, for example, a water-based polyurethane that is superior in storage stability and quick-drying ability and capable of forming a urethane film superior in chemical resistance even for short-time film formation, and a production method for the water-based polyurethane.

### Solution to Problem

The present inventors have diligently examined to solve the problems to find that the trade-off between the solid content of polyurethane in a water dispersion and the storage stability can be overcome by using a polyurethane precursor having a backbone structure derived from carbonate represented by a formula (1) in a main chain in a specific content proportion and a hydrophilic group in a side chain, and having a carboxyl group and a carboxylate group in a specific content proportion as necessary, and thus the problems can be solved, eventually completing the present invention. Specifically, the present invention provides various specific modes shown in the following.
<1>
   A water-based polyurethane, wherein
   the water-based polyurethane is a water dispersion of polyurethane, the water dispersion containing polyurethane and water,
   the polyurethane contains: a main chain having a urethane bond and a structure represented by a formula (1); and a side chain branching from the main chain and having a hydrophilic group, wherein the formula (1) is as follows: 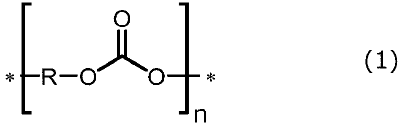 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding,
   the content proportion of the structure represented by the formula (1) with respect to the total mass of the polyurethane is 35% by mass or more,
   the polyurethane contains 0.00 to 0.85% by mass of a carboxyl group and a carboxylate group with respect to the total mass of the polyurethane, and
   the solid content of the polyurethane to the water dispersion is 35% by mass or more.
<2>
   The water-based polyurethane according to <1>, wherein
   the polyurethane is an addition polymer of polyol (A) and polyisocyanate (B),
   the polyol (A) contains polyol (a-1) containing: a main chain having a structure represented by a formula (1); and a side chain branching from the main chain and having a hydrophilic group, wherein the formula (1) is as follows: 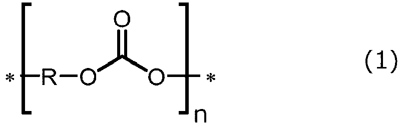 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding, and
   the content proportion of the structure represented by the formula (1) with respect to the total mass of the polyol (a-1) is 50% by mass or more.
<3>
   The water-based polyurethane according to <2>, wherein
   the hydrophilic group possessed by the polyol (a-1) is a nonionic hydrophilic group, and
   the polyol (A) further contains polyol (a-2) having a carboxyl group or carboxylate group.
<4>
   The water-based polyurethane according to <2> or <3>, wherein
   the hydrophilic group possessed by the polyol (a-1) is polyalkylene glycol.
<5>
   The water-based polyurethane according to any one of <2> to <4>, wherein
   the polyol (a-1) has at least one backbone Z selected from the group consisting of an isocyanurate backbone, an iminooxadiazinedione backbone, an allophanate backbone, and a biuret backbone in the main chain, and
   the side chain having the hydrophilic group is branching from the backbone Z.
<6>
   The water-based polyurethane according to <5>, wherein
   the backbone Z contains at least one isocyanurate backbone.
<7>
   The water-based polyurethane according to any one of <1> to <6>, wherein
   the polyurethane has an average particle size of 300 nm or less.
<8>
   A production method for a water-based polyurethane, the production method comprising a step of synthesizing a water dispersion of polyurethane, the water dispersion containing polyurethane and water, by reacting polyol (A) and polyisocyanate (B), wherein
   the polyol (A) contains polyol (a-1) containing: a main chain having a structure represented by a formula (1); and a side chain branching from the main chain and having a hydrophilic group, wherein the formula (1) is as follows: 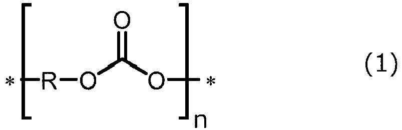 wherein R groups are the same or different, each being a linear or branched or alicyclic divalent hydrocarbon group having 2 to 20 carbon atoms and optionally substituted with a heteroatom, n represents an integer of 1 to 50, and * indicates bonding,
   the content proportion of the structure represented by the formula (1) with respect to the total mass of the polyol (a-1) is 50% by mass or more, and
   the solid content of the polyurethane to the water dispersion is 35% by mass or more.
   Here, the production method of <8> preferably further has the technical feature(s) according to any one of <2> to <7>.
<9>
   A water-based polyurethane, wherein
   the water-based polyurethane is a water dispersion of polyurethane, the water dispersion given by reacting polyol (A) and polyisocyanate (B),
   the polyurethane contains: a main chain having a urethane bond and a structure represented by a formula (1); and a side chain branching from the main chain and having a hydrophilic group, wherein the formula (1) is as follows: 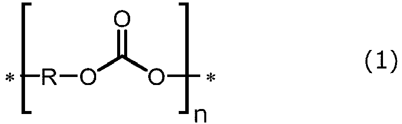 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding,
   the content proportion of the structure represented by the formula (1) with respect to the total mass of the polyurethane is 35% by mass or more,
   the polyurethane contains 0.00 to 0.85% by mass of a carboxyl group and a carboxylate group with respect to the total mass of the polyurethane, and
   the solid content of the polyurethane to the water dispersion is 35% by mass or more.
   Here, the water-based polyurethane of <9> preferably further has the technical feature(s) according to any one of <1> to <7>.
<10>
   A water-based polyurethane, wherein
   the water-based polyurethane is a water dispersion of polyurethane, the water dispersion given by reacting polyol (A) and polyisocyanate (B),
   the polyol (A) contains polyol (a-1) containing: a main chain having a structure represented by a formula (1); and a side chain branching from the main chain and having a hydrophilic group, wherein the formula (1) is as follows: 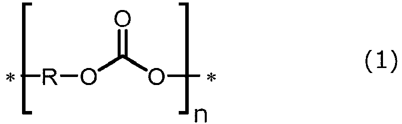 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding,
   the content proportion of the structure represented by the formula (1) with respect to the total mass of the polyol (a-1) is 50% by mass or more,
   the polyurethane contains 0.00 to 0.85% by mass of a carboxyl group and a carboxylate group with respect to the total mass of the polyurethane, and
   the solid content of the polyurethane to the water dispersion is 35% by mass or more.

Here, the water-based polyurethane of <10> preferably further has the technical feature(s) according to any one of <1> to <7>.

### Advantageous Effects of Invention

The present invention enables achievement of, for example, a water-based polyurethane that is superior in storage stability and quick-drying ability and capable of forming a urethane film superior in chemical resistance even for short-time film formation, and a production method for the water-based polyurethane. According to the present invention, inclusion of a hydrophilic group in a side chain having relatively high mobility not only imparts enhanced water dispersibility to polyurethane particles, but also causes repulsion by steric hindrance to polyurethane particles to inhibit the aggregation of polyurethane particles. By virtue of the combination of them, the dispersion of polyurethane particles in water is stabilized, and the water-based polyurethane achieves not only enhanced storage stability but also a higher solid content, and furthermore polyurethane particles are allowed to have smaller particle sizes.

### Description of Embodiments

The following describes an embodiment to implement the present invention (hereinafter, referred to as "the present embodiment") in detail. The embodiment shown below is an example to describe the present invention, and the present invention is not limited thereto. That is, the present invention can be implemented with any modification without departing from the subject matter. In the present specification, an expression of a numerical range, for example, "1 to 100", is intended to include both of the lower limit "1" and the upper limit "100". The same is applied to other expressions of a numerical range.

### [Water-based polyurethane]

The water-based polyurethane of the present embodiment is characterized by being a water dispersion of polyurethane, the water dispersion containing polyurethane and water, wherein the polyurethane contains: a main chain having a urethane bond and a structure represented by a formula (1); and a side chain branching from the main chain and having a hydrophilic group, wherein the formula (1) is as follows: 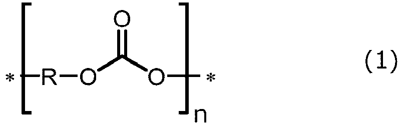 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding, the content proportion of the structure represented by the formula (1) to the total mass of the polyurethane is 35% by mass or more, the polyurethane contains 0.00 to 0.85% by mass of a carboxyl group and a carboxylate group with respect to the total mass of the polyurethane, and the solid content of the polyurethane to the water dispersion is 35% by mass or more.

Having the features, the water-based polyurethane of the present embodiment is capable of forming a urethane film in a short time, and moreover a water-based polyurethane superior in durability can be achieved even for short-time film formation. While increasing the solid content of polyurethane generally tends to result in deteriorated storage stability, the water-based polyurethane of the present embodiment, in spite of being a polyurethane water dispersion containing polyurethane and water, is superior in dispersion stability of polyurethane by virtue of the inclusion of a hydrophilic group in a side chain having relatively high mobility, and hence can achieve high storage stability.

Here, the water-based polyurethane of the present embodiment contains a branched polyurethane having a urethane bond, a main chain having the structure represented by the formula (1), and a side chain branching from the main chain, and has the aforementioned hydrophilic group in the side chain of the branched polyurethane. Here, the main chain of the polyurethane may be any main chain having a urethane bond and the structure represented by the formula (1) without limitation, and can be, in a mode, a main chain having a urethane bond, the structure represented by the formula (1), and a backbone Z described later. In this case, the side chain of the polyurethane can be a side chain branching from the backbone Z. The side chain of the polyurethane may be any side chain branching from the aforementioned main chain and having a hydrophilic group without limitation, and can be, in a mode, a side chain having a hydrophilic group and a urethane bond.

The term hydrophilic group refers to a functional group having high affinity with water. The introduction of a hydrophilic group allows the water-based polyurethane to have enhanced water dispersibility. Examples of hydrophilic groups include, but are not limited to, nonionic hydrophilic groups, anionic hydrophilic groups, cationic hydrophilic groups, and zwitterionic hydrophilic groups. Among these, nonionic hydrophilic groups and anionic hydrophilic groups are preferred, and nonionic hydrophilic groups are more preferred, for example, for versatility. Description of details on them will be shown later, and hence omitted here to avoid redundancy. In the present specification, a hydroxy group is not included in hydrophilic groups.

The structure represented by the formula (1) is a structure derived from carbonate. R in the formula (1) is a linear or branched divalent hydrocarbon group. R groups are the same or different, and the divalent hydrocarbon group optionally has a heteroatom. Description of details on the divalent hydrocarbon group will be shown later, and hence omitted here to avoid redundancy. The lower limit of the number of carbon atoms of R is preferably 2 or more, more preferably 3 or more, and further preferably 4 or more. The upper limit is preferably 20 or less, more preferably 10 or less, and further preferably 6 or less.

n in the formula (1) is an integer of 1 or more, preferably 1 to 50, and more preferably 3 to 30.

The content proportion of the structure represented by the formula (1) is preferably 35% by mass or more with respect to the total mass of the polyurethane. This allows the polyurethane to be superior in water resistance, thermal resistance, chemical resistance, durability, and the like as a tendency. The content proportion of the structure represented by the formula (1) is more preferably 40% by mass or more, further preferably 45% by mass or more, even further preferably 50% by mass or more, particularly preferably 55% by mass or more, and most preferably 60% by mass or more with respect to the total mass of the polyurethane, but is not limited thereto. The upper limit is not limited, and preferably 90% by mass or less, more preferably 85% by mass or less, and further preferably 80% by mass or less with respect to the total mass of the polyurethane.

The water-based polyurethane of the present embodiment may contain an additional component as long as the water-based polyurethane is the aforementioned polyurethane water dispersion containing polyurethane and water. Here, the additional component may be bound to the water-based polyurethane, or added as an additive separately from polyurethane and water.

The aforementioned polyurethane may contain a specific amount of a carboxyl group and a carboxylate group as necessary. The carboxyl group and a carboxylate group contained may be bound to the polyurethane, or bound to polyol (A) or polyisocyanate (B) described later. The carboxyl group and a carboxylate group may be contained in an additional component other than the polyurethane, polyol (A), and polyisocyanate (B). In the case that carboxyl groups and carboxylate groups are contained in multiple components, the total of carboxyl groups and carboxylate groups contained in the components is regarded as the content of carboxyl groups and carboxylate groups.

The water-based polyurethane of the present embodiment contains a carboxyl group and a carboxylate group in the range of 0.00% by mass or more to 0.85% by mass with respect to the total mass of the polyurethane. The content of a carboxyl group and a carboxylate group falling within that range allows the resulting water-based polyurethane to have superior storage stability, and allows a polyurethane coating film that is to be given by film formation to have higher durability. The content of a carboxyl group and a carboxylate group is not limited, and the lower limit is preferably 0.02% by mass or more, more preferably 0.03% by mass or more, and extremely preferably 0.10% by mass or more. The upper limit is preferably 0.85% by mass or less, more preferably 0.80% by mass or less, and extremely preferably 0.75% by mass or less.

### [Method for quantifying carboxyl group and a carboxylate group in water-based polyurethane]

The way of quantifying the carboxyl group and a carboxylate group in the water-based polyurethane in the present embodiment is not limited to any particular method; if the amount to be charged and the structure are clearly known, calculation can be made with the amount to be charged. The carboxyl group and a carboxylate group content in the present embodiment is calculated as the total mass of COOH or COO⁻ per mass of the water-based polyurethane. If the amount to be charged and the structure are unknown, a known method or a combination of known methods can be provided as a quantification method without limitation.

As an example, a quantification method using ¹H-NMR will be described. A specific amount of the water-based polyurethane is weighed out, to which 0.1 N hydrochloric acid was added dropwise to reach a pH of 4 to 5, causing precipitation, and the supernatant solution is discarded. If poor separation results at that time, an operation to separate by using a centrifuge may be performed as necessary, and an operation to promote precipitation by cooling may be performed. The resulting precipitate and a reference standard are dissolved in DMSO-d₆, the ¹H-NMR is measured to determine the ratio between the peak derived from the reference standard and that derived from the carboxyl group, and the content of the carboxyl group and a carboxylate group contained in the water-based polyurethane can be quantified from the ratio.

### [Method for characterizing and quantifying hydrophilic group and structure derived from formula (1) in water-based polyurethane]

The way of characterizing and quantifying the hydrophilic group and the structure derived from the formula (1) in the water-based polyurethane is not limited to any particular method; if the amount to be charged and the structure are clearly known, calculation can be made with the amount to be charged. If the amount to be charged and the structure are unknown, it is desired to first identify the hydrophilic group and the structure of the formula (1), and then quantify the hydrophilic group and the structure of the formula (1) by a method fitting with them. In the case of polyethylene glycol monomethyl ether, which was used in Examples shown later, for example, the hydrophilic group and the structure derived from the formula (1) can be quantified by means of gas chromatography (GC), high-performance liquid chromatography (HPLC), and ¹H-NMR after the water-based polyurethane has been hydrolyzed in the presence of a base. If measurement by this method is difficult, gel permeation chromatography (GPC) may be used in place of the method. If the hydrophilic group itself is susceptible to hydrolysis or the water-based polyurethane alone allows quantification, a method of quantifying by means of ¹H-NMR may be used.

### - Hydrolysis method

Approximately 10 g of a sample of the water-based polyurethane was precisely weighed out in a 100-mL egg plant flask, and 50 g of ethanol and 4.0 g of potassium hydroxide were added thereto. A magnetic stirrer was put therein, and stirring was performed in an oil bath set to 105 ± 5°C for 1 hour to subject urethane bond and carbonate bond moieties to alkaline decomposition. Subsequently, the reaction solution was cooled to room temperature, several drops of the indicator phenolphthalein were added thereto, and hydrochloric acid was added in small portions until the color disappeared. A portion of approximately 40 mL was taken from the supernatant solution, and transferred into a sample bottle, which was left to stand in a refrigerator having an internal temperature of 5°C overnight. After the leaving, the supernatant solution was filtered through a membrane filter having a pore size of 0.45 µm to give a filtrate. The GC analysis, GPC analysis, HPLC analysis, and ¹H-NMR analysis are performed for the resulting filtrate. In the GC analysis, GPC analysis, and HPLC analysis, the hydrophilic group component and formula (1) concentrations in the sample are determined from concentration calibration curves separately prepared by using the hydrophilic group component and monomer diol for the formula (1) each contained in the water-based polyurethane, and the masses are calculated from the solution volume, and divided by the mass of solid contents of the water-based polyurethane used for the alkaline decomposition; the resulting values are the content of the hydrophilic group component and the structure derived from the formula (1) in the water-based polyurethane.

### - Method of quantifying by means of ¹H-NMR

A sample of the water-based polyurethane is dissolved in DMSO-d₆, and subjected to ¹H-NMR measurement. As A is defined as an integrated value for a reference standard with a peak that does not overlap any peak derived from the water-based polyurethane, and B is defined as that for the peak derived from the hydrophilic group, the content of the hydrophilic group can be calculated from the molarity of A determined from the ratio between A and B and the molecular weight of the hydrophilic group.

The solid content of the aforementioned polyurethane in the water-based polyurethane of the present embodiment is not limited, and preferably 35% by mass or more, more preferably 37% by mass or more, further preferably 39% by mass or more, and particularly preferably 40% by mass or more. The high solid content of the polyurethane enables short-time film formation, resulting in higher productivity and economic efficiency as a tendency. The upper limit of the solid content of the polyurethane is not limited, and preferably 60% by mass or less, more preferably 57% by mass or less, further preferably 55% by mass or less, and particularly preferably 50% by mass or less.

The content proportion of water in the water-based polyurethane of the present embodiment is not limited, and preferably 40 to 65% by mass with respect to the total mass of the water-based polyurethane. The content proportion of water with respect to the total mass of the water-based polyurethane is more preferably 43% by mass or more, further preferably 45% by mass or more, and particularly preferably 50% by mass or more, and the upper limit is more preferably 63% by mass or less, further preferably 61% by mass or less, and particularly preferably 60% by mass or less.

The water-based polyurethane of the present embodiment can be a polyurethane water dispersion containing polyurethane and water. In this case, the polyurethane is preferably dispersed as polyurethane particles in water. An appropriate average particle size can be set for the polyurethane particles to fit with desired performance without limitation, and the average particle size is preferably 300 nm or less. In the present specification, the term average particle size of polyurethane particles refers to 50% cumulative particle size as determined by a dynamic light scattering method, and the average particle size can be determined, for example, by using a "Nanotrac UPA" manufactured by NIKKISO CO., LTD. As the average particle size of the polyurethane particles is smaller, precipitation is less likely to be caused on the occurrence of aggregation of particles, and good dispersion stability results as a tendency. The average particle size of the polyurethane particles is more preferably 280 nm or less, further preferably 260 nm or less, and particularly preferably 240 nm or less. The lower limit is not limited, and is preferably 50 nm or more, more preferably 80 nm or more, and further preferably 100 nm or more. On the other hand, as the average particle size is smaller, particles are positioned closer to each other to cause stronger interparticle interaction, and this results in increased viscosity and difficulty in achieving high solid content as a tendency.

An appropriate molecular weight can be set for the aforementioned polyurethane to fit with desired performance without limitation, and the polyurethane preferably has a mass-average molecular weight (Mw) of 10,000 to 500,000. The mass-average molecular weight falling within the range allows, as a tendency, the water-based polyurethane to have superior water dispersibility and to form a water-based polyurethane coating film superior in appearance through coating film formation. The mass-average molecular weight of the polyurethane is preferably 10,000 or more, and further preferably 30,000 or more, and preferably 500,000 or less, and further preferably 400,000 or less. The mass-average molecular weight (Mw) of the polyurethane can be calculated through measurement (with DMF) by GPC (gel permeation chromatography) described later in Examples. Examples of methods for controlling the mass-average molecular weight (Mw) of the polyurethane to fall within the range include, but are not limited to, a method of adjusting the ratio of starting materials to give a number-average molecular weight falling within the range in producing the polyurethane, and a method of controlling the mass-average molecular weight (Mw) by adding and/or extracting a polyhydric alcohol in producing the polyurethane.

An appropriate molecular weight can be set for the aforementioned polyurethane to fit with desired performance without limitation, and the polyurethane preferably has a number-average molecular weight (Mn) of 5,000 to 200,000. The number-average molecular weight falling within the range allows, as a tendency, the water-based polyurethane to have superior water dispersibility and to form a water-based polyurethane coating film superior in appearance through coating film formation. The number-average molecular weight of the polyurethane is preferably 5,000 or more, and further preferably 10,000 or more, and preferably 200,000 or less, and further preferably 150,000 or less. The number-average molecular weight (Mn) of the polyurethane can be calculated through measurement (with DMF) by GPC (gel permeation chromatography) described later in Examples. Examples of methods for controlling the number-average molecular weight (Mn) of the polyurethane to fall within the range include, but are not limited to, a method of adjusting the ratio of starting materials to give a number-average molecular weight falling within the range in producing the polyurethane, and a method of controlling by adding and/or extracting a polyhydric alcohol in producing the polyurethane.

Preferably, the aforementioned polyurethane is an addition polymer of polyol (A) and polyisocyanate (B). For example, the aforementioned polyurethane and water-based polyurethane can be obtained with ease by subjecting polyol (a-1) shown below as polyol (A) and polyisocyanate (B) to addition polymerization. In this case, the aforementioned polyurethane comes to have a structure derived from the polyol (a-1) and a structure derived from the polyisocyanate (B). The following describes a preferred mode in more detail.

### <Polyol (A)>

Examples of the polyol (A) as a starting material include, but are not limited to, polyol (a-1) containing a main chain having a structure represented by a formula (1) shown below and a side chain branching from the main chain and having a hydrophilic group, and polyol (a-2) having a carboxyl group or carboxylate group. The polyol (a-1) may further contain a carboxyl group or carboxylate group, and may contain a carboxyl group or carboxylate group in the side chain. The polyol (A) may contain only the polyol (a-1), or contain the polyol (a-1) and the polyol (a-2). Furthermore, the polyol (A) may contain an additional polyol component other than the polyol (a-1) and the polyol (a-2).

Specific examples of the polyol (a-1) include that shown below. That polyol (a-1) contains a main chain having a structure represented by a formula (1) shown below and a side chain branching from the main chain and having a hydrophilic group, and contains 50% by mass or more of the structure illustrated in the formula (1) shown below with respect to the total mass of the polyol (a-1). The structure represented by the following formula (1) is a structure derived from carbonate: 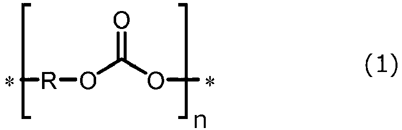 wherein R groups are the same or different, each being a linear or branched or alicyclic divalent hydrocarbon group having 2 to 20 carbon atoms and optionally substituted with a heteroatom, n represents an integer of 1 to 50, and _{*} indicates bonding.

The number of carbon atoms of R in the formula (1) is not limited and the lower limit thereof is preferably 2 or more, more preferably 3 or more, and further preferably 4 or more. The upper limit is preferably 20 or less, more preferably 10 or less, and further preferably 6 or less.

Specific examples of R in the formula (1) include, but are not limited to: a linear or branched hydrocarbon group such as an ethylene group, a propylene group, a butylene group, a 2-methylpropyl group, a pentylene group, a hexylene group, a heptylene group, an octylene group, a nonylene group, a decylene group, an oxyethylene group, an oxytetramethylene group, a polyoxyethylene group, a polyoxytetramethylene group, a fluoroalkyl group, a perfluoroalkyl group, an isopropylene group, an isobutylene group, a tert-butylene group, an isopentylene group, a 2,2-dimethyltrimethylene group, a 3-methylpropylene group, an isohexylene group, an isoheptylene group, an isooctylene group, an oxy(1-methylethylene) group, an oxy(2,2-dimethyltrimethylene) group, and a polyoxy(1-methylethylene) group; and an alicyclic hydrocarbon group such as cyclopentane, cyclohexane, methylcyclopentane, methylcyclohexane, and decalin. Among these, a propylene group, a butylene group, a pentylene group, a hexylene group, a nonylene group, a decylene group, an oxyethylene group, an oxytetramethylene group, a polyoxyethylene group, a polyoxytetramethylene group, an isopropylene group, an isobutylene group, an isopentylene group, a 2,2-dimethyltrimethylene group or an isohexylene group, an oxy(1-methylethylene) group, and a polyoxy1-methylethylene group are preferred, for example, for versatility.

n in the formula (1) is an integer of 1 or more, preferably 1 to 50, and more preferably 3 to 30.

Here, the term main chain for the polyol (a-1) refers to a polymer chain that is a moiety sandwiched between terminal hydroxy groups and has the structure represented by the formula (1). The term side chain for the polyol (a-1) refers to a polymer chain that is a moiety branching from a main chain and ranging from the branching site to a functional group that is present on the opposite side to bonding to the main chain, with the end being nonreactive with isocyanate. For example, in the following structure (illustration of the structure represented by the formula (1) is omitted), the solid-line part sandwiched between the hydroxy groups is a main chain, and the dashed-line part is a side chain.

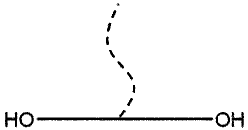

The term hydrophilic group refers to a functional group having high affinity with water. The introduction of a hydrophilic group to the side chain allows the water-based polyurethane to have enhanced water dispersibility. Examples of hydrophilic groups include, but are not limited to, nonionic hydrophilic groups, anionic hydrophilic groups, cationic hydrophilic groups, and zwitterionic hydrophilic groups. Among these, nonionic hydrophilic groups and anionic hydrophilic groups are preferred, and nonionic hydrophilic groups are more preferred, for example, for versatility. In the present specification, a hydroxy group is not included in hydrophilic groups.

Examples of nonionic hydrophilic groups include, but are not limited to, an oxyalkylene group and a polyvalent ester formed from polyhydric alcohol and fatty acid. Specific examples thereof include, but are not limited to, oxyethylene alkyl ether (e.g., polyethylene glycol monomethyl ether, polypropylene glycol monomethyl ether). A preferred nonionic hydrophilic group is polyalkylene glycol, and a more preferred nonionic hydrophilic group is polyethylene glycol monomethyl ether.

Examples of anionic hydrophilic groups include, but are not limited to, a carboxy group, a sulfonic acid group, and a phosphate group. Among these, a carboxy group and a sulfonic acid are preferred, and a carboxylic acid group is more preferred, for example, for water resistance.

Examples of cationic hydrophilic groups include, but are not limited to, a tetraalkylammonium group.

Examples of zwitterionic hydrophilic groups include, but are not limited to, a group having a betaine structure with anionic and cationic structures in the same molecule such as a carboxybetaine group, a sulfobetaine group, and a phosphorylbetaine group.

The content proportion of the hydrophilic group is not limited, and preferably 0.1 to 30 parts by mass, more preferably 0.2 to 25 parts by mass, further preferably 0.5 to 20 parts by mass, and particularly preferably 1.0 to 10 parts by mass as the total amount of the polyurethane is defined as 100 parts by mass. The hydrophilic group content falling within the range in the water-based polyurethane in the present embodiment allows the water-based polyurethane to have higher water dispersibility and storage stability, and at the same time a polyurethane coating film to be given has higher durability as a tendency.

The inclusion of a hydrophilic group in the side chain of the polyol (a-1) not only allows the water-based polyurethane to have higher water dispersibility, but also allows the water-based polyurethane to have lower viscosity through the effect of particle-to-particle repulsion by the steric hindrance between side chains, and hence the fluidity is less likely to be deteriorated in achieving high solid content as a tendency. The inclusion of 50% by mass or more of the structure represented by the formula (1) with respect to the total mass of the polyol (a-1) makes it easy, as a tendency, to form a polyurethane coating film superior in durability such as chemical resistance, thermal resistance, and water resistance. Moreover, superior water dispersibility is developed, which enables reduction of the amounts of the polyol (a-2) and an additional polyol component to be introduced, successfully avoiding a problem of reduction in the urethane group concentration of a polyurethane coating film, the reduction caused by increased proportions of usage of the polyol (a-2) and an additional polyol component, and as a result a polyurethane coating film to be given is allowed to keep the flexibility high. The polyol (a-1) contains the structure represented by the formula (1) preferably in an amount of 60% by mass or more, more preferably in an amount of 70% by mass or more, further preferably in an amount of 75% by mass or more, particularly preferably in an amount of 80% by mass or more with respect to the total mass of the polyol (a-1). The upper limit is not limited, and is preferably 99% by mass or less, more preferably 98% by mass or less, and further preferably 97% by mass or less with respect to the total mass of the polyol (a-1).

A component having a function other than the hydrophilic group may be optionally introduced. Examples of the component other than the hydrophilic group include, but are not limited to, a hydrophobic group to impart stain resistance and water repellency, an adsorptive group to increase adhesion to a substrate, and a crosslinkable group to cure a film. Examples of the hydrophobic group include a long-chain alkyl group having five or more carbon atoms, an alkylsiloxane group, and a fluorinated alkyl group. Examples of the adsorptive group include an alkoxysilyl group. Examples of the crosslinkable group include isocyanate protected with a blocking agent such as triazole.

The polyol (a-1) preferably has a backbone Z to serve as a branching point from the main chain to the side chain in the main chain. In this case, the side chain having a hydrophilic group is preferably branching from the backbone Z of the main chain. Specific examples of the backbone Z like this include, but are not limited to, an alkyl group, an aromatic backbone, an aliphatic backbone, an isocyanurate backbone, a biuret backbone, an allophanate backbone, and an iminooxadiazinedione backbone, each being trivalent or higher valent. Among these, the isocyanurate backbone, iminooxadiazinedione backbone, allophanate backbone, and biuret backbone are preferred, the isocyanurate backbone and iminooxadiazinedione backbone are more preferred, and the isocyanurate backbone is extremely preferred.

### [Production method for polyol (a-1)]

For example, the polyol (a-1) can be obtained as a hydroxy compound by a method of reacting a polyol compound in excess and a polyisocyanate compound or a method of reacting a polycarbonate polyol and any polyol in the presence of a transesterification catalyst, and the way of production is not limited to any particular production method. If some ends having no reactivity with polyol are present in the polyisocyanate used in any of those methods, the ends having no reactivity are present as side chains in the resulting polyol. Accordingly, the polyol (a-1) alone and a mixture of the polyol (a-1) and a polyol are both acceptable as the polyol (a-1).

The method of reacting a polyol compound and a polyisocyanate compound is not limited, and can be performed, for example, by mixing the starting materials and stirring the mixture upon heating. The temperature of the reaction is not limited, and the lower limit is preferably 50°C or more, more preferably 60°C or more, further preferably 70°C or more, and even further preferably 80°C or more. The upper limit is preferably 250°C or less, more preferably 200°C or less, further preferably 180°C or less, and even further preferably 160°C or less. With the reaction temperature equal to or higher than the lower limit, the reaction can be performed in shorter time, and superior economic efficiency is given. With the reaction temperature equal to or lower than the upper limit, the thermal degradation of the resulting polyol (a-1) can be effectively prevented.

The reaction pressure is not limited, and is preferably normal pressure or more and 1 MPa or less. With the reaction pressure falling within the range, the reaction can be performed in a simpler manner. In the case that an auxiliary material is used, the reaction can be more efficiently promoted by pressurizing to some extent with considering the vapor pressure or the like of the auxiliary material.

The progress and completion of the reaction can be checked, for example, by GPC (gel permeation chromatograph) measurement and an FT-IR (Fourier transform infrared spectrometer). With the progress of the reaction, the peaks derived from the starting materials in GPC measurement become smaller over time, and the completion of the reaction can be confirmed from the disappearance of the peaks. In addition, with use of the FT-IR, the completion of the reaction can be confirmed from the disappearance of an absorbance (Abs) peak around a wavenumber of 2273 cm⁻¹, which is derived from isocyanate groups (-NCO groups), in an infrared absorption spectrum. Before the reaction, for example, a step of dehydration treatment for the starting materials to be used may be performed as a pretreatment.

### [Method for characterizing and quantifying hydrophilic group in polyol (a-1)]

The way of characterizing and quantifying the hydrophilic group in the polyol (a-1) is not limited to any particular method; if the amount to be charged and the structure are clearly known, calculation can be made with the amount to be charged. If the amount to be charged and the structure are unknown, it is desired to first determine the structure of the hydrophilic group, and then quantify it by a method fitting with the hydrophilic group. In the case of polyethylene glycol monomethyl ether, which was used in Examples shown later, for example, the hydrophilic group can be quantified by means of gas chromatography (GC), high-performance liquid chromatography (HPLC), and ¹H-NMR after the polyol (a-1) has been hydrolyzed in the presence of a base. If measurement by this method is difficult, gel permeation chromatography (GPC) may be used in place of the method. If the hydrophilic group itself is susceptible to hydrolysis, a method of quantifying by means of¹H-NMR is preferred.

### - Hydrolysis method

Approximately 5 g of a sample of the polyol (a-1) was precisely weighed out in a 100-mL egg plant flask, and 50 g of ethanol and 4.0 g of potassium hydroxide were added thereto. A magnetic stirrer was put therein, and stirring was performed in an oil bath set to 105 ± 5°C for 1 hour to subject carbonate bond moieties to alkaline decomposition. Subsequently, the reaction solution was cooled to room temperature, several drops of the indicator phenolphthalein were added thereto, and hydrochloric acid was added in small portions until the color disappeared. A portion of approximately 40 mL was taken from the supernatant solution, and transferred into a sample bottle, which was left to stand in a refrigerator having an internal temperature of 5°C overnight. After the leaving, the supernatant solution was filtered through a membrane filter having a pore size of 0.45 µm to give a filtrate. The GC analysis, GPC analysis, and ¹H-NMR analysis are performed for the resulting filtrate. In the GC analysis, GPC analysis, and HPLC analysis, the hydrophilic group concentration in the sample is determined from a concentration calibration curve separately prepared by using the hydrophilic group component contained in the polyol (a-1), and the mass is calculated from the solution volume, and divided by the mass of the polyol (a-1) used for the alkaline decomposition; the resulting value is the content of the hydrophilic group in the polyol (a-1).

### - Method of quantifying by means of ¹H-NMR

A sample of the polyol (a-1) is dissolved in DMSO-d₆, and subjected to ¹H-NMR. As A is defined as an integrated value derived from hydroxy groups of the polyol, and B is defined as that for the peak derived from the hydrophilic group, the content of the hydrophilic group can be calculated from the molarity of A determined from the ratio between A and B and the OHV and the molecular weight of the functional group. Alternatively, instead of A, a reference standard with a peak that does not overlap any peak derived from the polyol (a-1) may be used for calculation.

### [Method for quantifying structure derived from formula (1) in polyol (a-1)]

The way of quantifying the structure derived from the formula (1) in the polyol (a-1) is not limited to any particular method; if the amount to be charged and the structure are clearly known, calculation can be made with the amount to be charged. If the amount to be charged and the structure are unknown, R can be determined by hydrolyzing the polyol (a-1) through the above hydrolysis and then performing GC analysis or HPLC analysis for the resulting filtrate, and the content of the structure of the formula (1) in the polyol (a-1) can be further calculated from a concentration calibration curve separately prepared.

The calculation can be made not only by that method, but also by the method described in [Method of quantifying by means of ¹H-NMR]. The analysis methods shown above may be combined as necessary.

### (Polyisocyanate)

Examples of isocyanate compounds as a starting material applicable in producing the polyol (a-1) can include, but are not limited to, aliphatic diisocyanates such as hexamethylene diisocyanate and trimethylhexamethylene diisocyanate, alicyclic diisocyanates such as isophorone diisocyanate, aromatic diisocyanates such as tolylene diisocyanate, 4,4'-diphenylmethane diisocyanate (hereinafter, occasionally abbreviated as "MDI"), xylylene diisocyanate, and naphthylene diisocyanate, isocyanate compounds having three or more isocyanate groups such as triphenylmethane-4,4'-4''-triisocyanate, 1,3,5-triisocyanatobenzene, 2,4,6-triisocyanatotoene, and 4,4'-dimethyldiphenylmethane-2,2',5,5'-tetraisocyanate, and modified products given by isocyanuration of, modified products given by biuretization of, and modified products given by iminooxadiazinedione formation of those isocyanates. Examples of commercially available products of isocyanate compounds include, but are not limited to, "DURANATE (product name)" series manufactured by Asahi Kasei Corporation, including 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, and WM44-L70G.

In addition to the above polyisocyanate compounds as a starting material applicable in producing the water-based polyurethane, synthesized ones can be used. Applicable are, for example, a polyisocyanate having an allophanate structure, which is described in WO 2003/027163 and obtained by reacting an alcohol, a diisocyanate, and an allophanate catalyst, and a polyisocyanate having a biuret structure, which is obtained by reacting an amine and a diisocyanate. In this case, if the alcohol or amine is monofunctional, a polyisocyanate having a side chain derived from the structure of the alcohol or amine can be obtained. Examples of identification methods for the structure of a polyisocyanate compound include, but are not limited to, a method by means of ¹³C-NMR described in Japanese Patent No. 6647130.

### (Polycarbonate polyol)

A polycarbonate polyol as a starting material applicable in producing the polyol (a-1) can be obtained in any manner without limitation, for example, by a production method described in Synthesis Example 2-3 for a polycarbonate polyol. Commercially available products can also be used. Examples of the commercially available products include, but are not limited to, "DURANOL (product name)" series manufactured by Asahi Kasei Corporation, including T6002, T6001, T5652, T5651, T5650J, T5650E, G4672, T4672, T4671, G3452, G3450J, and AK011.

A polycarbonate polyol with a diol structure introduced to the main chain can be obtained by subjecting a polycarbonate polyol and any diol to transesterification, and this can be used as a starting material. For example, a polycarbonate polyol can be obtained by reacting a carbonate compound and any diol compound in the presence of a transesterification catalyst. Examples of the transesterification reaction catalyst include, but are not limited to, an alkali metal and an alkaline earth metal, and an alcoholate, hydride, oxide, amide, hydroxide, and salt of any of them. The polycarbonate polyol synthesized by the method has a structure with a diol introduced to the main chain.

Specific examples of the polyol (a-2) having a carboxyl group or carboxylate group include, but are not limited to, 2,2-dimethylolpropionic acid (DMPA), 2,2-dimethylolbutanoic acid (DMBA), and a polyol described in [Example I-2] in Japanese Patent Laid-Open No. 2022-183274. While use of the polyol (a-2) tends to cause a polyurethane coating film that is to be obtained to have deteriorated flexibility and durability (against water, humidity and heat, chemicals), use of the polyol (a-1) enables reduction of the amount of the polyol (a-2) to be introduced, and successfully gives a polyurethane not only being superior in flexibility but also having high durability as a tendency.

In using the polyol (a-1) and the polyol (a-2) in combination, an appropriate usage ratio between the polyol (a-1) and the polyol (a-2) can be set to fit with desired performance without limitation, and the usage ratio is preferably 1:0.7, more preferably 1:0.6, further preferably 1:0.4, and particularly preferably 1:0.2 or less in the mole ratio of polyol (a-1):polyol (a-2). With the usage ratio of them falling within the preferable numerical range, a polyurethane coating film to be obtained is allowed to keep the flexibility high as a tendency.

A polyol other than the polyol (a-1) and the polyol (a-2) having a carboxyl group or carboxylate group may be used in combination for the polyol (A) to be used for synthesizing the water-based polyurethane in the present embodiment. Examples of polyols that can be used in combination include polyester polyol and polyether polyol, but are not limited thereto.

### (Polyester polyol)

A polyester polyol as a starting material applicable in producing the water-based polyurethane of the present embodiment can be obtained in any manner without limitation, for example, by a production method described in Japanese Patent Laid-Open No. 2006-328372 for a polyester polyol. Commercially available products can also be used. Examples of the commercially available products include, but are not limited to, P-** 10 and F-**10 series manufactured by Kuraray Co., Ltd., and POLYLITE series manufactured by DIC Corporation.

### (Polyether polyol)

A polyether polyol as a starting material applicable in producing the water-based polyurethane of the present embodiment can be obtained in any manner without limitation, for example, by a production method described in Japanese Patent No. 3299803 for a polyether polyol. Commercially available products can also be used. Examples of the commercially available products include, but are not limited to, polyethylene glycol manufactured by FUJIFILM Wako Pure Chemical Corporation.

### <Polyisocyanate (B)>

Examples of isocyanate compounds as a starting material applicable in producing the water-based polyurethane in the present embodiment can include, but are not limited to, aliphatic diisocyanates such as hexamethylene diisocyanate and trimethylhexamethylene diisocyanate, alicyclic diisocyanates such as isophorone diisocyanate, aromatic diisocyanates such as tolylene diisocyanate, 4,4'-diphenylmethane diisocyanate (hereinafter, occasionally abbreviated as "MDI"), xylylene diisocyanate, and naphthylene diisocyanate, isocyanate compounds having three or more isocyanate groups such as triphenylmethane-4,4'-4"-triisocyanate, 1,3,5-triisocyanatobenzene, 2,4,6-triisocyanatotoene, and 4,4'-dimethyldiphenylmethane-2,2',5,5'-tetraisocyanate, and modified products given by isocyanuration of, modified products given by biuretization of, and modified products given by iminooxadiazinedione formation of those isocyanates. Examples of commercially available products of isocyanate compounds include, but are not limited to, "DURANATE (product name)" series manufactured by Asahi Kasei Corporation, including 24A-100, 22A-75P, TPA-100, TKA-100, P301-75E, D101, D201, 21S-75E, MFA-75B, MHG-80B, TUL-100, TLA-100, TSA-100, TSS-100, TSE-100, E402-80B, E405-80B, AE700-100, A201H, 17B-60P, TPA-B80E, MF-B60B, MF-K60B, SBB-70P, SBN-70D, E402-B80B, WB40-100, WT30-100, WT31-100, WB40-80D, WT20-100, WL70-100, WE50-100, and WM44-L70G.

For example, the water-based polyurethane of the present embodiment can be an addition polymer of the polyol (A) and a polyisocyanate (an isocyanate having two or more NCO groups, preferably having two or more or two to four NCO groups). The polyisocyanate is not limited, and a known polyisocyanate such as a diisocyanate can be used without limitation. Alternatively, the water-based polyurethane of the present embodiment can be an addition polymer of the polyol (A), the polyisocyanate (B), one or more known polyols, and one or more known polyisocyanates.

### Examples

The following more specifically describes the present embodiment with specific examples and comparative examples, but the present embodiment is not limited by those examples and comparative examples, unless any deviation from the subject matter is present. That is, materials, amounts of usage, proportions, contents of processing, procedures of processing, and others shown below can be appropriately modified, unless the modification deviates from the spirit of the present invention. Values for production conditions and evaluation results shown below each have a meaning of a preferable upper limit value or a preferable lower limit value in a mode for implementing the present invention, and a preferable numerical range may be given as a range specified by a combination of the upper limit value or lower limit value and a value for an example shown below or values for examples shown below. Ratings and physical properties for examples and comparative examples shown later were determined through methods shown below. In Examples, "part" and "%" are based on mass, unless otherwise specified.

### [Measurement of hydroxyl value (OHV)]

The hydroxyl values of polyols and polyol-containing compositions obtained in examples and comparative examples shown later were measured in the following manner. With use of a volumetric flask, pyridine was added to 12.5 g of acetic anhydride until the volume reached 50 mL to prepare an acetylation reagent. For each of the polyols and polyol-containing compositions obtained in examples and comparative examples shown later as a sample, 1.0 to 10.0 g of the sample was precisely weighed out, and put in a 100-mL egg plant flask. To the egg plant flask, 5 mL of the acetylation reagent and 10 mL of toluene were added with a transfer pipette to give a solution. Subsequently, a condenser was attached to the egg plant flask, and the solution was stirred upon heating at 100°C for 1 hour. To the egg plant flask, 2.5 mL of distilled water was added with a transfer pipette, and the resulting solution was further stirred upon heating for 10 minutes. The solution was cooled for 2 to 3 minutes, 12.5 mL of ethanol was then added to the egg plant flask, two or three drops of phenolphthalein as an indicator were put therein, and the resultant was then titrated with 0.5 mol/L ethanolic potassium hydroxide. In a 100-mL egg plant flask, 5 mL of the acetylation reagent, 10 mL of toluene, and 2.5 mL of distilled water were put and stirred upon heating for 10 minutes, and the resulting solution was then titrated in the same manner (blank test). On the basis of those results, the hydroxyl values of the polyols and the polyol-containing compositions were calculated from the following expression (III): $Hydroxyl value \left(mg-KOH/g\right) = \left\{\left(b-a\right)\times 28.05\times f\right\} / e$ wherein a represents titration volume (mL) for a sample, b represents titration volume (mL) for the blank test, e represents the amount (g) of the sample, and f represents the factor of the titrant.

### [GPC measurement (with DMF)]

The mass-average molecular weights (Mw) and number-average molecular weights (Mn) of polyurethanes were measured by GPC in the following manner. Polyurethanes and water-based polyurethanes obtained in application examples and comparative application examples shown later were each used as a sample. Measurement samples were prepared with dimethylformamide (hereinafter, referred to as DMF) to give a concentration of 0.5% by mass, and the mass-average molecular weights (Mw) and number-average molecular weights (Mn) of the polyurethanes in terms of polystyrene standards were measured by using the following GPC apparatus.

### GPC apparatus: HLC-8320 manufactured by Tosoh Corporation

Analysis column: TSKgel SuperHM-H × 3 columns
Guard column: TSKgel guardcolumn H-H
Reference column: TSKgel SuperH-RC
Eluent: N,N-dimethylformamide (DMF)
Flow rate: 0.5 mL/min
Column temperature: 40°C
RI detector: RI (built-in device of HLC-8320)
Calibration curve formula: cubic polynomial
Calibration curve: polystyrene standards (manufactured by Tosoh Corporation)
   - F-40 (molecular weight: 4.27 × 10⁵)
   - F-20 (molecular weight: 1.90 × 10⁵)
   - F-10 (molecular weight: 9.64 × 10⁴)
   - F-4 (molecular weight: 3.79 × 10⁴)
   - F-2 (molecular weight: 1.81 × 10⁴)
   - F-1 (molecular weight: 1.02 × 10⁴)
   - A-5000 (molecular weight: 5.97 × 10³)
   - A-2500 (molecular weight: 2.63 × 10³)
   - A-1000 (molecular weight: 2.63 × 10³)

### [FT-IR measurement]

For polyol-containing compositions obtained in examples and comparative examples shown later as samples, the absorbances of the samples in infrared absorption spectra were determined with an FT-IR (Fourier transform infrared spectrometer) in the following manner.

Measurement samples were each thinly spread on a rock salt plate (NaCl plate, 35 × 35 × 5 mm), and the absorbances of the samples in infrared absorption spectra were determined by FT-IR with the following apparatus and conditions.
FI-IR apparatus: FT/IR-4600 type A (JASCO Corporation)
Light source: standard light source
Detector: TGS
Number of scans: 16
Resolution: 4 cm⁻¹
Zero-filling: On
Apodization: Cosine
Gain: Auto (2)
Aperture: Auto (7.1 mm)
Scan speed: Auto (2 mm/sec)
Filter: Auto (30000 Hz)
Data type: evenly spaced data
Abscissa: Wavenumber (cm⁻¹)
Ordinate: Abs
Start: 400 cm⁻¹
End: 40000 cm⁻¹

### [Structural analysis of water-based polyurethanes, polyols, and polyisocyanates]

The structures of water-based polyurethanes, polyols, and polyisocyanates were analyzed by a method by means of ¹³C-NMR. The mole fractions of isocyanurate groups, iminooxadiazinedione structures, allophanate groups, and biuret groups were determined by measurement of ¹³C-NMR with a Biospin Avance 600 (product name) manufactured by Bruker. The specific measurement conditions were as follows.
¹³C-NMR apparatus: AVANCE 600 (manufactured by Bruker)
CryoProbe (manufactured by Bruker)
Cryo Probe
CPDUL
600S3-C/H-D-05Z
Resonance frequency: 150 MHz
Concentration: 60 wt/vol%
Shift reference: CDCl₃ (77 ppm)
Number of scans: 10000
Pulse program: zgpg30 (proton complete decoupling method, pulse delay: 2 sec)

Then, integrated values for the following signals were divided by the number of carbon atoms under measurement, and the mole ratios were determined from the resulting values.
Amount of moles of isocyanurate groups (mol%, represented as "A"): around 148.6 ppm: integrated value / 3
Amount of moles of iminooxadiazinedione groups (mol%, represented as "A"): around any of 148.3 ppm, 144.6 ppm, and 137.3 ppm: integrated value / 1
Amount of moles of allophanate groups (mol%, represented as "B"): around 154 ppm: integrated value / 1
Amount of moles of biuret groups (mol%, represented as "C"): around 155.8 ppm: (integrated value - integrated value for allophanate groups) / 2

### [Isocyanate group concentration (% by mass)]

The isocyanate group concentrations (% by mass) of polyisocyanate compounds were measured as follows. In an Erlenmeyer flask, 1 to 3 g of a polyisocyanate compound produced in a production example was precisely weighed out (Wg), and 20 mL of toluene was added thereto to completely dissolve the polyisocyanate (composition). Subsequently, 10 mL of 2 N toluene solution of di-n-butylamine was added and completely mixed, and the resultant was then left at room temperature for 15 minutes. Further, 70 mL of isopropyl alcohol was added to the solution and completely mixed. This solution was titrated with 1 N hydrochloric acid solution (factor F) with use of an indicator to give a titration value of V₂ mL. The same titration operation was performed without the polyisocyanate (composition) to give a titration value of V₁ mL. With the obtained titration values V₂ mL and V₁ mL, the isocyanate group concentration (% by mass) of the polyisocyanate was calculated from the following expression. $Isocyanate group concentration = \left({V}_{1}-{V}_{2}\right) \times F \times 42 / \left(W\times 1000\right) \times 100$

### (Synthesis Example 1)

### [Synthesis of polyisocyanate (PI)]

### (Synthesis Example 1-1)

To a 300-ml separable flask, 100 g of 24A-100 (manufactured by Asahi Kasei Corporation, NCO: 24.0%) as a polyisocyanate to be modified, 171.4 g of polyethylene glycol monomethyl ether (mPEG) (manufactured by NIPPON NYUKAZAI CO., LTD., product name: "MPG-081") as a starting material for modification for isocyanate, and dibutyltin dilaurate (manufactured by Tokyo Chemical Industry Co., Ltd.) as a catalyst in an amount of 100 ppm with respect to the other components were added, and reacted with stirring under nitrogen at 80°C for 2 hours. When the NCO% was found to reach theoretical amount ± 3%, the reaction was terminated. This operation gave polyisocyanate PI-1, which had a biuret structure and a PEG side chain structure. The NCO% was 6.19%.

### (Synthesis Example 1-2)

A four-necked flask equipped with a stirrer, a thermometer, and a condenser was charged with 300 g of HDI and 200 g of polyethylene glycol monomethyl ether (mPEG) (manufactured by NIPPON NYUKAZAI CO., LTD., product name: "MPG-081"), and urethanization reaction was performed under stirring at 90°C for 1 hour. Then, the temperature was increased to 130°C, and 0.26 g of a mineral spirit solution of zirconyl 2-ethylhexanoate, as an allophanatization catalyst, having a solid content of 20% (manufactured by Nihon Kagaku Sangyo Co., Ltd., product name: "Nikka Octhix Zirconium 12%", diluted with mineral spirit) was added. After 1 hour, when the increase of the refractive index of the reaction solution reached 0.008, 0.097 g (2.0 times the moles of the allophanatization catalyst) of an isobutanol solution of pyrophosphoric acid (a reagent manufactured by KATAYAMA CHEMICAL INDUSTRIES Co., Ltd.) having a solid content of 50% was added to terminate the reaction. The ¹³C-NMR of the reaction solution was measured to confirm allophanate groups. With use of a flow thin-film distillation apparatus, unreacted HDI was removed at 160°C (0.2 Tor) in the first operation and at 150°C (0.1 Tor) in the second operation; thus, polyisocyanate PI-2, which had a PEG side chain structure and an allophanate structure, was obtained. The NCO% was 7.90%.

### (Synthesis Example 1-3)

To a 300-ml separable flask, 100 g of TLA-100 (manufactured by Asahi Kasei Corporation, NCO: 23.6%) as a polyisocyanate to be modified, 116.5 g of polyethylene glycol monomethyl ether (mPEG) (manufactured by NIPPON NYUKAZAI CO., LTD., product name: "MPG-081") as a starting material for modification for isocyanate, and dibutylphosphoric acid (manufactured by Tokyo Chemical Industry Co., Ltd.) as a catalyst in an amount of 300 ppm with respect to the other components were added, and reacted with stirring under nitrogen at 120°C for 4 hours. The proportion of the starting material for modification with respect to NCO was 30 mol%. When the NCO% was found to reach theoretical amount ± 3%, the reaction was terminated. This operation gave polyisocyanate PI-3, which had an isocyanurate structure and a PEG side chain structure. The NCO% was 7.65%.

### (Synthesis Example 1-4)

To a 300-ml separable flask, 100 g of Desmodur N3900 (manufactured by Covestro AG, NCO: 23.5%) as a polyisocyanate to be modified, 115.9 g of polyethylene glycol monomethyl ether (mPEG) (manufactured by NIPPON NYUKAZAI CO., LTD., product name: "MPG-081") as a starting material for modification for isocyanate, and dibutylphosphoric acid (manufactured by Tokyo Chemical Industry Co., Ltd.) as a catalyst in an amount of 300 ppm with respect to the other components were added, and reacted with stirring under nitrogen at 120°C for 4 hours. The proportion of the starting material for modification with respect to NCO was 30 mol%. When the NCO% was found to reach theoretical amount ± 3%, the reaction was terminated. This operation gave polyisocyanate PI-4, which had an isocyanurate structure and a PEG side chain structure. The NCO% was 7.59%.

The starting materials used in Synthesis Example 1 are as follows. Polyisocyanates to be modified
- 24A-100: aliphatic polyisocyanate having biuret structures, manufactured by Asahi Kasei Corporation, NCO: 24.0%
- TLA-100: aliphatic polyisocyanate having isocyanurate structures, manufactured by Asahi Kasei Corporation, NCO: 23.6%
- Desmodur N3900: polyisocyanate having iminooxadiazinedione structures, manufactured by Covestro AG, NCO: 23.5%

### Starting materials for modification

- mPEG: polyethylene glycol monomethyl ether (used to introduce hydrophilic group to side chain, manufactured by NIPPON NYUKAZAI CO., LTD., product name: "MPG-081", monofunctional)

### (Synthesis Example 2)

### [Synthesis of polycarbonate polyol (PCD)]

### (Synthesis Example 2-1)

Polycarbonate polyol PCD-1, which had carboxyl groups in side chains, was obtained in the same manner as a method described in [Example I-2] in Japanese Patent Laid-Open No. 2022-183274. The hydroxyl value was 50.0 mg KOH/g, and the acid value was 13.1 mg KOH/g. The quantitative proportion of hydrophilic groups in PCD-1 was 0.83% by mass.

### (Synthesis Example 2-2)

Polycarbonate polyol PCD-2, which had polyethylene glycol groups in side chains, was obtained in the same manner as a method described in Example 1 in Japanese Patent Laid-Open No. 2019-131689. The hydroxyl value was 58.4 mg KOH/g. The quantitative proportion of hydrophilic groups in PCD-2 was 24.1% by mass.

### (Synthesis Example 2-3)

A 2-L glass flask (hereinafter, also referred to as "reactor") equipped with a rectification column packed with regular packing materials and a stirring device was charged with 396 g of 1,4-butanediol, 500 g of 1,6-hexanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 700 g of a polycarbonate polyol having a hydroxyl value of 56.1 mg KOH/g was obtained.

To a 1-L separable flask, 500 g of the polycarbonate polyol obtained and 67.9 g of PI-1 (NCO: 6.19%) were added, and, after nitrogen purge, reacted at 100°C for 3 hours to give PCD-3, which had a PEG side chain structure. FT-IR confirmed the disappearance of the peak derived from NCO as the end point. NCO/OH (mole ratio) was 0.20. The hydroxyl value of PCD-3 was 40.1 mg KOH/g. The quantitative proportion of hydrophilic groups in PCD-3 was 7.55% by mass.

### (Synthesis Example 2-4)

A 2-L glass flask (hereinafter, also referred to as "reactor") equipped with a rectification column packed with regular packing materials and a stirring device was charged with 396 g of 1,4-butanediol, 441 g of 1,5-pentanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 680 g of a polycarbonate polyol having a hydroxyl value of 56.3 mg KOH/g was obtained.

To a 1-L separable flask, 500 g of the polycarbonate polyol obtained and 13.3 g of PI-2 (NCO: 7.90%) were added, and, after nitrogen purge, reacted at 100°C for 3 hours to give PCD-4, which had a PEG side chain structure. NCO/OH (mole ratio) was 0.05. FT-IR confirmed the disappearance of the peak derived from NCO as the end point. The hydroxyl value of PCD-4 was 52.4 mg KOH/g. The quantitative proportion of hydrophilic groups in PCD-4 was 1.74% by mass.

### (Synthesis Example 2-5)

A 2-L glass flask (hereinafter, also referred to as "reactor") equipped with a rectification column packed with regular packing materials and a stirring device was charged with 458 g of 1,5-pentanediol, 500 g of 1,6-hexanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 790 g of a polycarbonate polyol having a hydroxyl value of 112.5 mg KOH/g was obtained.

To a 1-L separable flask, 500 g of the polycarbonate polyol obtained and 99.1 g of PI-3 (NCO: 7.65%) were added, and, after nitrogen purge, reacted at 100°C for 3 hours to give PCD-5, which had a PEG side chain structure. NCO/OH (mole ratio) was 0.18. FT-IR confirmed the disappearance of the peak derived from NCO as the end point. The hydroxyl value of PCD-5 was 75.6 mg KOH/g. The quantitative proportion of hydrophilic groups in PCD-5 was 8.90% by mass.

### (Synthesis Example 2-6)

A 2-L glass flask (hereinafter, also referred to as "reactor") equipped with a rectification column packed with regular packing materials and a stirring device was charged with 458 g of 1,5-pentanediol, 500 g of 1,6-hexanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 690 g of a polycarbonate polyol having a hydroxyl value of 55.8 mg KOH/g was obtained.

To a 1-L separable flask, 500 g of the polycarbonate polyol obtained and 49.2 g of PI-3 (NCO: 7.65%) were added, and, after nitrogen purge, reacted at 100°C for 3 hours to give PCD-6, which had a PEG side chain structure. NCO/OH (mole ratio) was 0.18. FT-IR confirmed the disappearance of the peak derived from NCO as the end point. The hydroxyl value of PCD-6 was 45.6 mg KOH/g. The quantitative proportion of hydrophilic groups in PCD-6 was 4.82% by mass.

### (Synthesis Example 2-7)

A 2-L glass flask (hereinafter, also referred to as "reactor") equipped with a rectification column packed with regular packing materials and a stirring device was charged with 396 g of 1,4-butanediol, 737 g of 1,10-decanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 720 g of a polycarbonate polyol having a hydroxyl value of 56.5 mg KOH/g was obtained.

To a 1-L separable flask, 500 g of the polycarbonate polyol obtained and 27.7 g PI-3 (NCO: 7.65%) were added, and, after nitrogen purge, reacted at 100°C for 3 hours to give PCD-7, which had a PEG side chain structure. NCO/OH (mole ratio) was 0.10. FT-IR confirmed the disappearance of the peak derived from NCO as the end point. The hydroxyl value of PCD-7 was 48.6 mg KOH/g. The quantitative proportion of hydrophilic groups in PCD-7 was 2.82% by mass.

### (Synthesis Example 2-8)

A 2-L glass flask (hereinafter, also referred to as "reactor") equipped with a rectification column packed with regular packing materials and a stirring device was charged with 635 g of 1,3-butanediol, 39.6 g of 2-methyl-propanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, 680 g of a polycarbonate polyol having a hydroxyl value of 54.2 mg KOH/g was obtained.

To a 1-L separable flask, 500 g of the polycarbonate polyol obtained and 53.5 g of PI-4 (NCO: 7.59%) were added, and, after nitrogen purge, reacted at 100°C for 3 hours to give PCD-8, which had a PEG side chain structure. NCO/OH (mole ratio) was 0.20. FT-IR confirmed the disappearance of the peak derived from NCO as the end point. The hydroxyl value of PCD-8 was 40.1 mg KOH/g. The quantitative proportion of hydrophilic groups in PCD-8 was 5.19% by mass.

### (Comparative Synthesis Example 2-1)

In accordance with Example 2 in Japanese Patent No. 6276848, a 2-L glass flask (hereinafter, also referred to as "reactor") equipped with a rectification column packed with regular packing materials and a stirring device was charged with 458 g of 1,5-pentanediol, 500 g of 1,6-hexanediol, and 760 g of ethylene carbonate, and 0.086 g of titanium tetra-n-butoxide as a catalyst was then put therein. The resultant was reacted at a reaction temperature of 160 to 175°C for 12 hours while part of the distillate was extracted. Subsequently, the reactor was directly connected to a condenser, the reaction temperature was raised to 175 to 190°C, the pressure was then gradually decreased, and the diol component in the reactor was distilled off while sampling was appropriately performed to measure the hydroxyl value of the polycarbonate polyol formed; thus, a polycarbonate polyol having a hydroxyl value of 109.8 mg KOH/g (860 g) was obtained. To the polycarbonate polyol obtained (600 g), 369 g of PEG-1000 (manufactured by Wako Pure Chemical Industries, Ltd., "polyethylene glycol 1000" (product name)) as a starting material to form nonionic hydrophilic groups was added, the resultant was stirred at 150°C for 6 hours, the reaction temperature was then decreased to 115°C, 0.056 g of 85% phosphoric acid was added, and the resultant was stirred at 115°C for 3 hours to give rPCD-1, which had a hydroxyl value of 112.2 mg KOH/g and had a PEG structure in the main chain.

### (Comparative Synthesis Example 2-2)

To a 1-L separable flask, 115 g of PTMG-2000 (manufactured by Mitsubishi Chemical Corporation), 232 g of ETERNACOLL UH-200 (manufactured by Ube Industries, Ltd.), which is a polycarbonate diol made from 1,5-pentanediol and 1,6-hexanediol as starting materials and has a molecular weight of 2000, 122 g of 1,4-butanediol, and 126 g of PI-3 (NCO: 7.65%) were added, and, after nitrogen purge, reacted at 100°C for 3 hours to give rPCD-2, which had a PEG side chain structure. NCO/OH (mole ratio) was 0.075. FT-IR confirmed the disappearance of the peak derived from NCO as the end point. The hydroxyl value of rPCD-2 was 267.6 mg KOH/g. The quantitative proportion of hydrophilic groups in rPCD-2 was 13.4% by mass.

### (Synthesis Example 3)

### [Method for producing water-based polyurethane coating film (polyurethane dispersion (PUD))]

Starting materials used for synthesis of PUD are as follows.

### <Polyols>

- The polyols shown in Synthesis Examples (PCD-1 to PCD-9, rPCD-1, rPCD-2)
- DMPA: 2,2-dimethylolpropionic acid (manufactured by Tokyo Chemical Industry Co., Ltd.)
- PTMG-2000: polytetramethylene glycol (molecular weight: 2000, manufactured by Mitsubishi Chemical Corporation)
- rPCD-3: a polycarbonate diol made from 1,5-pentanediol and 1,6-hexanediol as starting materials and having a molecular weight of 1000 (manufactured by Asahi Kasei Corporation, T5651)

### <Polyisocyanates>

- H₁₂-MDI: 4,4' methylenebis(cyclohexyl isocyanate) (manufactured by Tokyo Chemical Industry Co., Ltd.)
- IPDI: isophorone diisocyanate (manufactured by Tokyo Chemical Industry Co., Ltd.)

### <Base>

- TEA: triethylamine (manufactured by Tokyo Chemical Industry Co., Ltd.)

### <Solvent>

- MEK: methyl ethyl ketone (manufactured by Tokyo Chemical Industry Co., Ltd.)

### <Chain extenders>

- EDA: ethylenediamine (manufactured by Tokyo Chemical Industry Co., Ltd.)
- 2-Methyl-1,5-diaminopentane (manufactured by Tokyo Chemical Industry Co., Ltd.)

### <Catalyst>

- DBTDL: dibutyltin dilaurylate (manufactured by Tokyo Chemical Industry Co., Ltd.)

### <Other>

- Pure water

### (Synthesis Example 3-1)

To a 1000-mL separable flask, 160.0 g of PCD-1 as the polyol (A), 106.3 g of MEK, and DBTDL as a catalyst in an amount of 100 ppm with respect to the two components were added, and refluxed under nitrogen at 90°C for 15 minutes. Subsequently, 37.5 g of H₁₂-MDI as the polyisocyanate (B) was added, and the resultant was stirred with refluxing at 90°C until an NCO% of 3.5 ± 0.3% by mass was reached to give a MEK solution of urethane prepolymer containing terminal isocyanate groups. The NCO% was the proportion of the mass of isocyanate groups possessed by the polyisocyanate with respect to the total mass of the starting materials used in the prepolymer step, and determined by the method described in [Isocyanate group concentration (% by mass)].

The urethane prepolymer solution obtained was cooled to 35°C, and 3.8 g of TEA was added with stirring at 500 rpm. Subsequently, 296.2 g of pure water was added dropwise at a rate of 10 mL/min while the solution was kept at 35°C and the stirring at 500 rpm was continued; thus, an emulsion solution (emulsified solution) was obtained.

While the emulsion solution obtained was kept at 35°C and the stirring at 500 rpm was continued, 2.1 g of EDA was added to perform chain extension reaction. Finally, methyl ethyl ketone was distilled off from the solution after the chain extension reaction under heating and reduced pressure; thus, a water-based polyurethane of Synthesis Example 3-1, PUD-1, was obtained. The solid content of polyurethane in the water-based polyurethane was 40%.

### (Synthesis Examples 3-2 to 3-10, Comparative Synthesis Examples 1 to 6)

Water-based polyurethanes of Synthesis Examples 3-2 to 3-10, PUD-2 to PUD-10, and those of Comparative Synthesis Examples 1 to 6, rPUD-1 to rPUD-6, were obtained by using starting materials and amounts in mass of input shown in Table 1 in the same manner as in Synthesis Example 3-1. The solid contents of polyurethane in the water-based polyurethanes obtained were as shown in Table 1.

### (Synthesis Examples 3-11 and 3-12)

Water-based polyurethanes of Synthesis Examples 3-11 and 3-12, PUD-11 and PUD-12, were obtained by using starting materials and amounts in mass of input shown in Table 2 in the same manner as in Synthesis Example 3-1. The solid contents of polyurethane in the water-based polyurethanes obtained were as shown in Table 2.

**[Table 1]**

| | PUD | Polyol A | | | | Polyisocyanate B | | Base | | Solvent | | Chain extender | | Water [g] | Solid content [% by mass] | Molecular weight | |
|---|---|---|---|---|---|---|---|---|---|---|---|---|---|---|---|---|---|
| | | a-1 | Mass [g] | a-2 | Mass [g] | Type | Mass [g] | Type | Mass [g] | Type | Mass [g] | Type | Mass [g] | | | Mw | Mn |
| Synthesis Example 3-1 | PUD-1 | PCD-1 | 160.0 | (PCD-1) | - | H₁₂-MDI | 37.5 | TEA | 3.8 | MEK | 106.3 | EDA | 2.1 | 296.2 | 40 | 37,200 | 12,000 |
| Synthesis Example 3-2 | PUD-2 | PCD-2 | 125.0 | DMPA | 3.4 | IPDI | 34.4 | TEA | 2.5 | MEK | 87.7 | 2-methyl-1,5-diaminopentane | 3.8 | 244.2 | 40 | 81,000 | 30,000 |
| Synthesis Example 3-3 | PUD-3 | PCD-3 | 167.0 | DMPA | 0.4 | HDI | 32.1 | TEA | 0.3 | MEK | 107.4 | EDA | 1.8 | 299.3 | 40 | 459,000 | 170,000 |
| Synthesis Example 3-4 | PUD-4 | PCD-4 | 161.0 | DMPA | 1.6 | IPDI | 36.1 | TEA | 1.2 | MEK | 107.0 | EDA | 2.3 | 298.0 | 40 | 288,000 | 120,000 |
| Synthesis Example 3-5 | PUD-5 | PCD-5 | 185.0 | DMPA | 3.0 | IPDI | 59.8 | TEA | 2.3 | MEK | 133.4 | EDA | 4.5 | 247.8 | 50 | 372,000 | 120,000 |
| Synthesis Example 3-6 | PUD-6 | PCD-5 | 190.0 | DMPA | 0.1 | IPDI | 57.0 | TEA | 0.1 | MEK | 133.0 | EDA | 4.6 | 247.1 | 50 | 207,000 | 90,000 |
| Synthesis Example 3-7 | PUD-7 | PCD-6 | 157.0 | DMPA | 5.0 | IPDI | 36.5 | TEA | 3.7 | MEK | 106.9 | EDA | 1.9 | 296.1 | 40 | 432,000 | 180,000 |
| Synthesis Example 3-8 | PUD-8 | PCD-7 | 159.0 | DMPA | 3.7 | IPDI | 36.7 | TEA | 2.8 | MEK | 107.4 | EDA | 2.1 | 297.4 | 40 | 147,000 | 70,000 |
| Synthesis Example 3-9 | PUD-9 | PCD-8 | 163.0 | DMPA | 3.9 | IPDI | 32.3 | TEA | 2.9 | MEK | 107.3 | EDA | 1.8 | 297.2 | 40 | 184,000 | 92,000 |
| Synthesis Example 3-10 | PUD-10 | PCD-5 | 190.0 | DMPA | 0.0 | IPDI | 56.8 | TEA | 0.0 | MEK | 132.9 | EDA | 4.6 | 246.8 | 40 | 93,000 | 30,000 |
| Comparative Synthesis Example 1 | rPUD-1 | rPCD-1 | 150.0 | DMPA | 5.0 | IPDI | 41.6 | TEA | 3.8 | MEK | 105.9 | EDA | 2.3 | 294.0 | 40 | unmeasurable | |
| Comparative Synthesis Example 2 | rPUD-2 | PCD-2 | 148.0 | DMPA | 5.6 | IPDI | 43.4 | TEA | 4.2 | MEK | 106.1 | EDA | 2.3 | 295.5 | 40 | 117,600 | 42,000 |
| Comparative Synthesis Example 3 | rPUD-3 | PCD-2 | 113.0 | DMPA | 3.7 | IPDI | 32.3 | TEA | 2.8 | MEK | 80.2 | EDA | 1.8 | 347.6 | 30 | 69,300 | 33,000 |
| Comparative Synthesis Example 4 | rPUD-4 | rPCD-2 | 55.0 | DMPA | 1.5 | IPDI | 62.8 | TEA | 1.1 | MEK | 65.3 | EDA | 4.1 | 181.8 | 40 | 346,800 | 102,000 |
| Comparative Synthesis Example 5 | rPUD-5 | PTMG | 180.0 | DMPA | 10.3 | IPDI | 56.9 | TEA | 7.7 | MEK | 133.1 | EDA | 2.7 | 247.2 | 50 | 70,200 | 18,000 |
| Comparative Synthesis Example 6 | rPUD-6 | rPCD-3 | 122.0 | DMPA | 7.4 | IPDI | 66.3 | TEA | 5.5 | MEK | 105.3 | EDA | 3.7 | 293.5 | 40 | 45,600 | 24,000 |

**[Table 2]**

| | PUD | Polyol A | | | | Polyisocyanate B | | Base | | Solvent | | Chain extender | | Water [g] | [% by mass] | Molecular weight | |
|---|---|---|---|---|---|---|---|---|---|---|---|---|---|---|---|---|---|
| | | a-1 | Mass [g] | a-2 | Mass [g] | Type | Mass [g] | Type | Mass [g] | Type | Mass [g] | Type | Mass [g] | | | Mw | Mn |
| Synthesis Example 3-11 | PUD-11 | PCD-5 | 185.0 | DMPA | 6.20 | IPDI | 65.6 | TEA | 4.7 | MEK | 138.3 | EDA | 4.5 | 256.8 | 50 | 361,000 | 114,000 |
| Synthesis Example 3-12 | PUD-12 | PCD-5 | 185.0 | DMPA | 6.28 | IPDI | 65.8 | TEA | 4.7 | MEK | 138.4 | EDA | 4.5 | 257.0 | 50 | 359,000 | 113,000 |

The content of the structure derived from the formula (1) and carboxylate in PUD-3 obtained in Synthesis Example 3-3 were quantified by the methods described in [Method for quantifying carboxyl group and a carboxylate group in water-based polyurethane] and [Method for characterizing and quantifying hydrophilic group and structure derived from formula (1) in water-based polyurethane], and the content of carboxylate groups and that of the structure derived from the formula (1) to the urethane resin were 0.07% by mass and 88%, respectively. In addition, the presence of polyethylene glycol monomethyl ether contained in the structure was identified.

### (Step of producing PUD coating film)

### (Examples 1 to 10, Comparative Examples 1 to 6)

Each of the water-based polyurethanes obtained was applied onto a polypropylene plate (JIS K6921), to which a formwork had been attached to give a dry film thickness of 300 µm, and the resulting water-based polyurethane coating films were evaluated on various physical properties by methods described later. The evaluation results are shown in Table 3.

**[Table 3]**

| | PUD | Polyol A | | | | | | | Polyisocyanate B | Content proportion [% by mass] of carboxy groups and carboxylate groups in polyurethane | Content proportion [% by mass] of structure of formula (1) in polyurethane | Solid content [% by mass] | Average particle size [nm] | Storage stability | Quick-drying ability | Chemical resistance |
|---|---|---|---|---|---|---|---|---|---|---|---|---|---|---|---|---|
| | | a-1 | | | | | | a-2 | | | | | | | | |
| | | Name of component | Type of hydrophilic group | Position of introduction of hydrophilic group | R | Content proportion [% by mass] of formula (1) in a-1 | z | Name of component | | | | | | | | |
| Example 1 | PUD-1 | PCD-1 | carboxyl | side chain | C₆H₁₂ | 98% | - | - | H₁₂-MDI | 0.83 | 77.0 | 40 | 100 | A | 73% | 39% |
| Example 2 | PUD-2 | PCD-2 | PEG | side chain | C₆H₁₂ | 76% | - | DMPA | IPDI | 0.67 | 56.2 | 40 | 80 | A | 69% | 34% |
| Example 3 | PUD-3 | PCD-3 | PEG | side chain | C₄H₈/C₆H₁₂ | 88% | biuret | DMPA | HDI | 0.07 | 77.4 | 40 | 210 | A | 83% | 22% |
| Example 4 | PUD-4 | PCD-4 | PEG | side chain | C₄H₈/C₅H₁₀ | 97% | allophanate | DMPA | IPDI | 0.27 | 77.3 | 40 | 230 | A | 85% | 19% |
| Example 5 | PUD-5 | PCD-5 | PEG | side chain | C₅H₁₀/C₆H₁₂ | 83% | isocyanurate | DMPA | IPDI | 0.40 | 60.2 | 50 | 100 | A | 95% | 8% |
| Example 6 | PUD-6 | PCD-5 | PEG | side chain | C₅H₁₀/C₆H₁₂ | 83% | isocyanurate | DMPA | IPDI | 0.01 | 62.7 | 50 | 240 | A | 92% | 14% |
| Example 7 | PUD-7 | PCD-6 | PEG | side chain | C₅H₁₀/C₆H₁₂ | 91% | isocyanurate | DMPA | IPDI | 0.82 | 70.0 | 40 | 150 | A | 91% | 9% |
| Example 8 | PUD-8 | PCD-7 | PEG | side chain | C₄H₈/C₁₀H₂₀ | 95% | isocyanurate | DMPA | IPDI | 0.61 | 73.9 | 40 | 120 | A | 90% | 12% |
| Example 9 | PUD-9 | PCD-8 | PEG | side chain | C₃H₆/CH₃CH(CH₃)CH₃ | 90% | iminooxadiazinedione | DMPA | IPDI | 0.64 | 71.9 | 40 | 120 | A | 91% | 10% |
| Example 10 | PUD-10 | PCD-5 | PEG | side chain | C₅H₁₀/C₆H₁₂ | 83% | isocyanurate | DMPA | IPDI | 0.00 | 62.7 | 40 | 290 | B | 92% | 7% |
| Comparative Example 1 | rPUD-1 | rPCD-1 | PEG | main chain | C₅H₁₀/C₆H₁₂ | 75% | - | DMPA | IPDI | 0.83 | 55.5 | 40 | unratable | unratable | unratable | unratable |
| Comparative Example 2 | rPUD-2 | PCD-2 | PEG | side chain | C₆H₁₂ | 76% | - | DMPA | IPDI | 0.91 | 55.3 | 40 | 10 | C | 62% | 89% |
| Comparative Example 3 | rPUD-3 | PCD-2 | PEG | side chain | C₆H₁₂ | 76% | - | DMPA | HDI | 0.81 | 55.9 | 30 | 120 | A | 24% | 65% |
| Comparative Example 4 | rPUD-4 | rPCD-2 | PEG | side chain | C₆H₁₂ | 43% | isocyanurate | DMPA | IPDI | 0.39 | 19.4 | 40 | 200 | B | 42% | 70% |
| Comparative Example 5 | rPUD-5 | PTMG | - | - | - | 0% | - | DMPA | IPDI | 1.34 | 0.0 | 50 | 50 | C | 10% | dissolved |
| Comparative Example 6 | rPUD-6 | rPCD-3 | - | - | C₅H₁₀/C₆H₁₂ | 100% | - | DMPA | IPDI | 1.21 | 59.6 | 40 | 310 | C | 59% | 50% |

### (Step of producing PUD coating film)

### (Examples 11 and 12)

Each of the water-based polyurethane PUD-11 and 12 obtained was applied onto a polypropylene plate (JIS K6921), to which a formwork had been attached to give a dry film thickness of 300 µm, and the resulting water-based polyurethane coating films were evaluated on various physical properties by methods described later. The evaluation results are shown in Table 4.

### (Comparative Example 7)

To a 1000-mL separable flask, 154.5 g of rPCD-3, 3.0 g of DMPA, and 133.4 g of MEK were added, DBTDL in an amount of 100 ppm with respect to the three components was added as a catalyst, and the resultant was refluxed under nitrogen at 90°C for 15 minutes. Subsequently, 59.8 g of IPDI and 30.5 g of PI-3 were added, and the resultant was stirred with refluxing at 90°C until an NCO% of 3.5 ± 0.3% by mass was reached to give a MEK solution of urethane prepolymer containing terminal isocyanate groups. The NCO% was the proportion of the mass of isocyanate groups possessed by the polyisocyanate with respect to the total mass of the starting materials used in the prepolymer step, and determined by the method described in [Isocyanate group concentration (% by mass)]. The urethane prepolymer solution obtained was cooled to 35°C, and 2.3 g of TEA was added with stirring at 500 rpm. Subsequently, 247.8 g of pure water was added dropwise at a rate of 10 mL/min while the solution was kept at 35°C and the stirring at 500 rpm was continued; thus, an emulsion solution (emulsified solution) was obtained.

While the emulsion solution obtained was kept at 35°C and the stirring at 500 rpm was continued, 4.5 g of EDA was added to perform chain extension reaction. Finally, methyl ethyl ketone was distilled off from the solution after the chain extension reaction under heating and reduced pressure; thus, a water-based polyurethane of Synthesis Example 3-1, rPUD-7, was obtained. The solid content of polyurethane in the water-based polyurethane was 50%. rPUD-7 is identical to PUD-5 in terms of their constituent components and ratios thereof, but different in terms of production methods therefor in that PI-3 was used as the polyisocyanate in synthesis of PUD. The evaluation results are shown in Table 5.

### (Comparative Example 8)

To a 1000-mL separable flask, 21.5 g of UH-200, 1.5 g of DMPA, 65.3 g of MEK, 11.3 g of 1,4-butanediol, and 10.6 g of PTMG-2000 were added, DBTDL in an amount of 100 ppm with respect to the total of the components was added as a catalyst, and the resultant was refluxed under nitrogen at 90°C for 15 minutes. Subsequently, 62.8 g of IPDI and 11.7 g of PI-3 were added, and the resultant was stirred with refluxing at 90°C until an NCO% of 3.5 ± 0.3% by mass was reached to give a MEK solution of urethane prepolymer containing terminal isocyanate groups. The NCO% was the proportion of the mass of isocyanate groups possessed by the polyisocyanate with respect to the total mass of the starting materials used in the prepolymer step, and determined by the method described in [Isocyanate group concentration (% by mass)]. The urethane prepolymer solution obtained was cooled to 35°C, and 1.1 g of TEA was added with stirring at 500 rpm. Subsequently, 181.8 g of pure water was added dropwise at a rate of 10 mL/min while the solution was kept at 35°C and the stirring at 500 rpm was continued; thus, an emulsion solution (emulsified solution) was obtained.

While the emulsion solution obtained was kept at 35°C and the stirring at 500 rpm was continued, 4.1 g of EDA was added to perform chain extension reaction. Finally, methyl ethyl ketone was distilled off from the solution after the chain extension reaction under heating and reduced pressure; thus, a water-based polyurethane of Synthesis Example 3-1, rPUD-8, was obtained. The solid content of polyurethane in the water-based polyurethane was 40%. rPUD-8 is identical to rPUD-4 in terms of their constituent components and ratios thereof, but different in terms of production methods therefor in that PI-3 was used as the polyisocyanate in synthesis of PUD. The evaluation results are shown in Table 5.

**[Table 4]**

| | PUD | Polyol A | | | | | | | Polyisocyanate B | Content proportion [% by mass] of carboxy groups and carboxylate groups in polyurethane | Content proportion [% by mass] of structure of formula (1) in polyurethane | Solid content [% by mass] | Average particle size [nm] | Storage stability | Quick-drying ability | Chemical resistance |
|---|---|---|---|---|---|---|---|---|---|---|---|---|---|---|---|---|
| | | a-1 | | | | | | a-2 | | | | | | | | |
| | | Name of component | Type of hydrophilic group | Position of introduction of hydrophilic group | R | Content proportion [% by mass] of formula (1) in a-1 | Z | Name of component | | | | | | | | |
| Example 11 | PUD-11 | PCD-5 | PEG | side chain | C₅H₁₀/C₆H₁₂ | 83% | isocyanurate | DMPA | IPDI | 0.78 | 57.8 | 50 | 50 | A | 93% | 15% |
| Example 12 | PUD-12 | PCD-5 | PEG | side chain | C₅H₁₀/C₆H₁₂ | 83% | isocyanurate | DMPA | IPDI | 0.79 | 57.7 | 50 | 50 | A | 93% | 38% |

**[Table 5]**

| | PUD | Polyol A | | | | | | | Polyisocyanate B | Content proportion [% by mass] of carboxy groups and carboxylate groups in polyurethane | Content proportion [% by mass] of structure of formula (1) in polyurethane | Solid content [% by mass] | Average particle size [nm] | Storage stability | Quick-drying ability | Chemical resistance |
|---|---|---|---|---|---|---|---|---|---|---|---|---|---|---|---|---|
| | | a-1 | | | | | | a-2 | | | | | | | | |
| | | Name of component | Type of hydrophilic group | Position of introduction of hydrophilic group | R | Content proportion [% by mass] of formula (1) in a-1 | Z | Name of component | | | | | | | | |
| Comparative Example 7 | rPUD-7 | blended with the same component ratios as in Example 5 | | | | | | | | 0.40 | 0.0 | 50 | 100 | A | 95% | 8% |
| Comparative Example 8 | rPUD-8 | in accordance with Japanese Patent Laid-Open No. 2021-165353 | | | | | | | | | | | | | | |

### [Measurement of solid content of PUD]

An aluminum pan is weighed for the mass, w₀. Subsequently, PUD obtained in any of Examples and Comparative Examples was weighed on the aluminum pan that has been weighed, and the mass is recorded. This mass is defined as w₁. The aluminum pan having the PUD placed thereon is calcined with an oven at 105°C for 3 hours, and the aluminum pan is then weighted again for the mass. This mass is defined as w₂. The solid content of the PUD is calculated from the following calculation formula. $\left(Solid content\right) = \left({w}_{2}-{w}_{0}\right) / \left({w}_{1}-{w}_{0}\right)$

### [Evaluation of storage stability of PUD]

A glass container is tightly plugged, and the particle sizes of dispersed particles in PUD solution were measured before and after heating test with a thermostat at 50°C for 4 weeks. For measurement of the volume-average particle sizes of water-based polyurethanes, a "Nanotrac UPA" manufactured by NIKKISO CO., LTD. was used. Evaluation criteria were as shown below, and smaller particle size change was determined to be better in storage stability (water dispersion stability).

### (Evaluation criteria)

A: the change in particle size in percentage was less than 2%
B: the change in particle size in percentage was 2% or more and less than 5%
C: the change in particle size in percentage was 5% or more

### [Evaluation of quick-drying ability]

A water-based polyurethane coating film was obtained by leaving at room temperature for 6 hours and then calcining at 80°C for 1 hour, and a water-based polyurethane coating film was obtained by leaving at room temperature for 24 hours and then calcining at 80°C for 3 hours. The breaking strength of the water-based polyurethane coating film obtained by leaving at room temperature for 6 hours and calcinating at 80°C for 1 hour, N₁, and the breaking strength of the water-based polyurethane coating film obtained by leaving at room temperature for 24 hours and calcinating at 80°C for 3 hours, N₂, were determined in tensile test shown below, and the quick-drying factor F = N₁ / N₂ was calculated for comparison. Higher quick-drying factor F indicates capability of forming a coating film of high quality in shorter time, and thus superiority in quick-drying ability.

### [Tensile test]

A strip-shaped sample of 1 cm × 10 cm was prepared from a water-based polyurethane coating film, and subjected to tensile test by using a tensile tester (manufactured by Orientec Corporation, product name: "TENSILON, model RTE-1210") at a chuck-to-chuck distance of 20 mm, a tensile speed of 100 mm/min, and a temperature of 23°C (relative humidity: 55%) to measure the 100% modulus and breaking strength. In evaluation of flexibility, lower 100% moduli are preferred, for example, for texture.

### [Chemical resistance test]

A water-based polyurethane coating film obtained by leaving at room temperature for 6 hours and then calcining at 80°C for 1 hour was cut to prepare a strip-shaped sample of 1 cm × 10 cm, and the mass was measured. This mass is defined as w₁. The sample cut out was soaked in oleic acid at 23°C for 7 days. Thereafter, the sample was taken out of the oleic acid and sandwiched in a Kimtowel to wipe off the oleic acid briefly, and the mass was again measured. This mass is defined as w₂. The swelling rate was determined from Swelling rate S = (w₂ - w₁) / w₁. A lower swelling rate indicates a urethane film having better chemical resistance.

### (Evaluation of flexibility)

For the obtained water-based urethane coating films PUD-5 and rPUD-4, -7, and -8, evaluation of flexibility was conducted in tensile test described later. The evaluation results are shown in Table 6. PUD-5 and rPUD-4, as well as rPUD-7 and rPUD-8, are identical in terms of constituent components and ratios thereof, but different in timing of loading the polyisocyanate PI-3. PI-3 was used in synthesis of PCD for PUD-5 and rPUD-7, and in synthesis of PUD for rPUD-4 and rPUD-8. As shown in Table 6, use of PI-3 in synthesis of PCD resulted in a flexible coating film.

**[Table 6]**

| | PUD | Timing of loading PI-3 | 100% modulus [MPa] |
|---|---|---|---|
| Example 5 | PUD-5 | synthesis of PCD | 5.1 |
| Comparative Example 4 | rPUD-4 | | 4.0 |
| Comparative Example 7 | rPUD-7 | synthesis of PUD | 6.7 |
| Comparative Example 8 | rPUD-8 | | 6.2 |

It is believed that the sequence of constituent components in PUD affects the mechanism of the flexibility differences arising from production methods. Specifically, in the case that a polyisocyanate having a hydrophilic group is loaded in synthesis of PCD, the polyisocyanate surely reacts with the polymer PCD; on the other hand, in the case that such a polyisocyanate is loaded in synthesis of PUD, the polyisocyanate can react not only with PCD but also with the low-molecular-weight monomer DMPA and others. The polyisocyanate structure, which has high cohesive force, and low-molecular-weight monomers, which cause increased urethane group concentration in urethane, both result in deteriorated flexibility in the urethane, and hence in the latter case nonflexible components are expected to form through reaction of the polyisocyanate structure and DMPA, resulting in deteriorated flexibility.

### Industrial Applicability

The present invention can provide, for example, a water-based polyurethane that is superior in storage stability and quick-drying ability and capable of forming a urethane film superior in chemical resistance even for short-time film formation, and a production method for the water-based polyurethane, and hence can be widely and effectively used in the field of materials of polyurethane or water-based polyurethane.

## Claims

1. A water-based polyurethane, wherein
the water-based polyurethane is a water dispersion of polyurethane, the water dispersion containing polyurethane and water,
the polyurethane contains: a main chain having a urethane bond and a structure represented by a formula (1); and a side chain branching from the main chain and having a hydrophilic group, wherein the formula (1) is as follows: 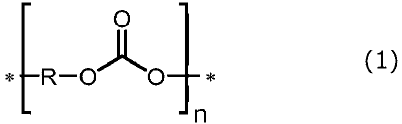 wherein R groups are the same or different, each being a linear or branched or alicyclic divalent hydrocarbon group having 2 to 20 carbon atoms and optionally substituted with a heteroatom, n represents an integer of 1 to 50, and * indicates bonding,
a content proportion of the structure represented by the formula (1) with respect to a total mass of the polyurethane is 35% by mass or more,
the polyurethane contains 0.00 to 0.85% by mass of a carboxyl group and a carboxylate group with respect to the total mass of the polyurethane, and
a solid content of the polyurethane to the water dispersion is 35% by mass or more.

2. The water-based polyurethane according to claim 1, wherein
the polyurethane is an addition polymer of polyol (A) and polyisocyanate (B),
the polyol (A) contains polyol (a-1) containing: a main chain having a structure represented by a formula (1); and a side chain branching from the main chain and having a hydrophilic group, wherein the formula (1) is as follows: 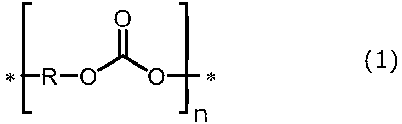 wherein R groups are the same or different, each being a linear or branched or alicyclic divalent hydrocarbon group having 2 to 20 carbon atoms and optionally substituted with a heteroatom, n represents an integer of 1 to 50, and * indicates bonding, and
a content proportion of the structure represented by the formula (1) with respect to a total mass of the polyol (a-1) is 50% by mass or more.

3. The water-based polyurethane according to claim 2, wherein
the hydrophilic group possessed by the polyol (a-1) is a nonionic hydrophilic group, and
the polyol (A) further contains polyol (a-2) having a carboxyl group or carboxylate group.

4. The water-based polyurethane according to claim 3, wherein
the hydrophilic group possessed by the polyol (a-1) is polyalkylene glycol.

5. The water-based polyurethane according to claim 2, wherein
the polyol (a-1) has at least one backbone Z selected from the group consisting of an isocyanurate backbone, an iminooxadiazinedione backbone, an allophanate backbone, and a biuret backbone in the main chain, and
the side chain having the hydrophilic group is branching from the backbone Z.

6. The water-based polyurethane according to claim 5, wherein
the backbone Z contains at least one isocyanurate backbone.

7. The water-based polyurethane according to claim 1, wherein
the polyurethane has an average particle size of 300 nm or less.

8. A production method for a water-based polyurethane, the production method comprising a step of synthesizing a water dispersion of polyurethane, the water dispersion containing polyurethane and water, by reacting polyol (A) and polyisocyanate (B), wherein
the polyol (A) contains polyol (a-1) containing: a main chain having a structure represented by a formula (1); and a side chain branching from the main chain and having a hydrophilic group, wherein the formula (1) is as follows: 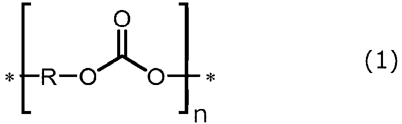 wherein R groups are the same or different, each being a linear or branched or alicyclic divalent hydrocarbon group having 2 to 20 carbon atoms and optionally substituted with a heteroatom, n represents an integer of 1 to 50, and * indicates bonding,
a content proportion of the structure represented by the formula (1) with respect to a total mass of the polyol (a-1) is 50% by mass or more, and
a solid content of the polyurethane to the water dispersion is 35% by mass or more.
